# EUROPEAN PATENT APPLICATION

(11) **EP 1 253 510 A2**
(43) Date of publication of application: **30.10.2002**
(21) Application number: 02396054.5
(22) Date of filing: 18.04.2002
(51) Int. Cl.: G06F 3/033

(54) **Method for displaying information on the display of an electronic device**

(30) Priority: 20.04.2001 FI 20010817
(71) Applicant: Nokia Corporation, 02150 Espoo (FI)
(72) Inventor: Ijas, Jari, 00320 Helsinki (FI); Kalliokulju, Satu, 37470 Vesilahti (FI); Rantanen, Vesa, 33720 Tampere (FI)
(74) Representative: Pursiainen, Timo Pekka

(57) **Abstract**

The invention relates to a method for presenting information on services (1a, 1b, 1c) on the display (4) of an electronic device (MT). In the method the display (4) is divided into cells (C1 to C6). In one cell (C1 to C6) information on one service is displayed.

## Description

The present invention relates to a method for displaying information on services on the display of an electronic device. The invention further relates to an electronic device comprising means for performing services, a display, and means for displaying information on services on the display of an electronic device.

Electronic devices are known for running applications that form information to be displayed to the user of an electronic device. The information is displayed by using a user interface, which normally comprises at least a display for presenting visual information. The user interface can also comprise audio means for presenting audio information to the user and supplying audio information to the electronic device. The user interface normally comprises also a keypad or keyboard, and possibly also a pointer device (a so-called mouse) by means of which the user can enter information and control the operation of the electronic device.

Some electronic devices, such as computers and communication devices, such as Nokia 9210 Communicator, are capable of performing a plurality of applications (application programs). One application can further comprise a plurality of different sub-applications, *e.g.* processing more than one text file in a word processing application. Applications and sub-applications transmit information to the user by means of a user interface. Correspondingly, the user can use the application through the user interface. In the present specification, the term service refers *e.g.* to visual information created in an application, such as a picture and/or text, which is displayed on the display of the user interface.

In prior art electronic devices the visual information produced in different applications is not displayed simultaneously, but the user must activate the application whose information is displayed on the display. A blinking icon, sound message or information window is created for example of an incoming short message or e-mail message, so that the user can detect, that a new message has arrived. Subsequently, the user must start the application in question, and in case it is already running, the window of the service corresponding to the application must be brought to the display and enlarged, if needed. Only after these operations the user can read the arrived message. Additionally, in a situation in which the user has another service active, the window used for displaying the information contained in this active service is topmost on the display (on the desktop), wherein it is easy for the user to use the service. Thus, particularly in such electronic devices that have a relatively small-sized display the windows of the other services must be shown as small icons or they must be hidden behind the active service window. This means that the user cannot in all situations notice if the visual information changes in some other service.

In case visual information of more than one service is wished to be displayed simultaneously in prior art electronic devices, the user must modify the windows of these services, and possibly drag them to different locations on the screen. In some applications a separate command can be used to change the window size of simultaneous services of said application, but in this case all these windows will be substantially of the same size, and they can hide windows of other services. Also, in a situation, in which the user changes from one service to another it may be necessary to modify the size of the windows and/or their location on the display.

A further problem in prior art electronic devices is *inter alia* that services are started by pointing an icon on the display by using a pointer means and by double clicking a push button of the pointer means. However, such an icon is not necessarily formed for all the applications installed in the electronic device, wherein an application can be started by searching the right application from a menu or from various lists. Starting the application is, however, troublesome and finding a particular application can be difficult, especially when searching from lists. Also, one can fairly easily make erroneous selections in situations described above.

The purpose of the present invention is to provide an improved method of showing information about services on the display of an electronic device. The invention is based on the idea that the display is divided into cells, each of which is presenting information on one service. In addition, the cell size can be changed to more easily detect information that is important at a time. To be more exact, the method of the present invention is primarily characterized in that the display is divided into cells, and that information of one service is displayed in one cell. The electronic device of the present invention is primarily characterized in that the electronic device comprises means for dividing the display into cells, and means for displaying one service in one cell.

By means of the present invention, considerable advantages are achieved when compared to methods and electronic devices of prior art. By adapting a method according to the invention, it is possible to show information on a plurality of services simultaneously, even on a small-size display. Moreover, the displayed information can be more easily detected. The form how the information is displayed can be changed *inter alia* by changing the cell size on the basis of the importance of the information to be displayed, wherein information that is less important does not hinder showing more important information, even in situations, in which the important information is formed by a service other than the information of the currently active service. Moreover, when the latest information is displayed, it is possible *e.g.* to change the size of the cell determined for the service in question and to display therein at least a part of the new information. On the display of the electronic device of the invention, it is possible to simultaneously display a plurality of active cells with information. Furthermore, by using the method of the invention it is possible to more easily determine the cell size and, if needed, to more easily change the cell compared to what is possible in prior art methods and electronic devices. Also, the freshness of information can easily be taken into account in the appearance of cells, wherein more recent information can be displayed in a more easily detectable form than older information, which the user may have detected earlier.

In the following, the invention will be described in more detail with reference to the appended drawings, in which
- Fig. 1: shows an implementation of a method according to a preferred embodiment of the invention in a reduced block chart,

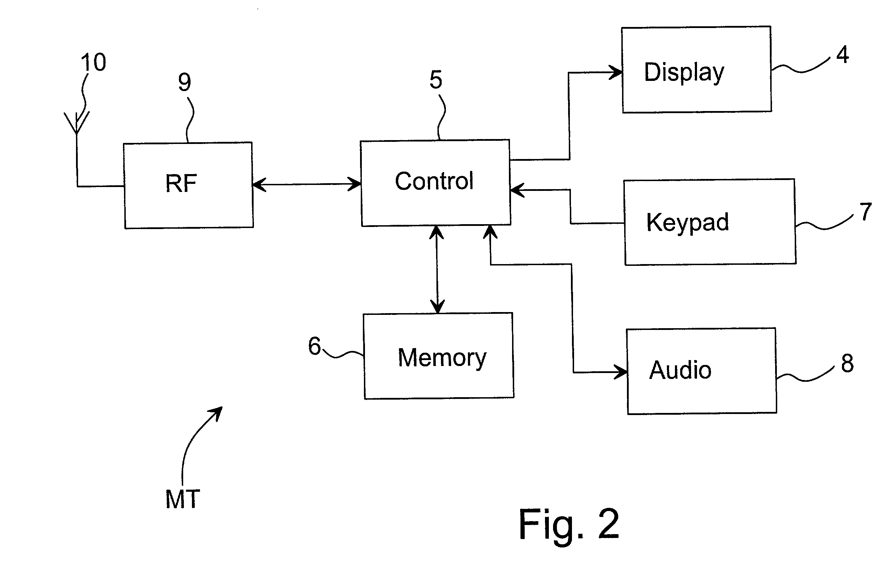

- Fig. 2: shows an electronic device, in which the invention can be applied,
- Fig. 3: shows an example on dividing the display into cells, and
- Fig. 4: shows an example on changing the cell division of the display.

In the following, the electronic device MT of the invention will be exemplified by a portable electronic device with data processing functions and mobile station functions, but it is obvious that the invention can be applied also in other electronic devices that have means for using applications, means for creating services on the display, and one or a plurality of displays for displaying visual information on services.

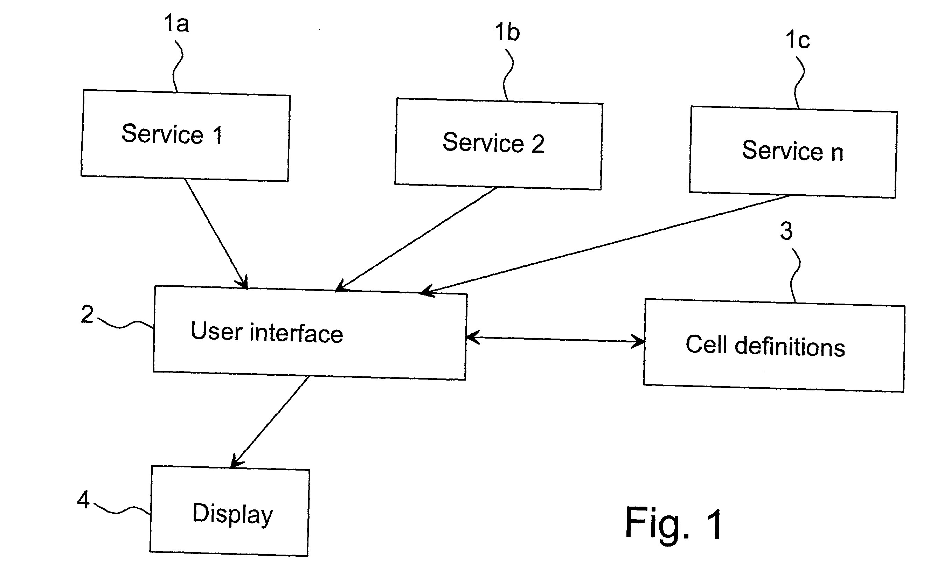

The electronic device MT comprises *inter alia* a control means 5, such as a microprocessor for controlling functions of the electronic device, a display 4 for displaying visual information, and entering means, such as a keypad or keyboard 7, and/or a pointer means (not shown) for entering information in the electronic device and for controlling the use of the electronic device. Additionally, the electronic device 1 of Fig. 1 comprises audio means 8, such as an earpiece/loudspeaker for forming audio information, and a microphone for supplying audio information to the electronic device 1. In connection with the electronic device 1 there is also arranged a memory 6 *e.g.* for storing application programs and cell definitions. By means of a radio part 9 and an antenna 10 mobile station functions and other wireless data transmission can be performed between a wireless communication network, such as a mobile communication network, and the electronic device 1.

In the electronic device 1, application programs implementing various services can be stored to be performed during the use of the electronic device. Such application programs include for example applications related to telephone functions, calendar, notebook, clock, word processing, calculator, etc. Application program codes are stored into the memory 6, which comprises advantageously read/write memory, nonvolatile read-only memory and/or mass memory, such as hard disk. In addition, the electronic device 1 can have means (not shown) for coupling additional memory. For example CD-ROM disks, DVD disks, and/or FLASH memory can be used as such additional memory.

In the method according to a preferred embodiment of the invention a weight value is determined for the services. This weight value determines the importance of the service in question. The number of weight values can vary in different electronic devices 1. There can be for example three weight values: 1, 2, 3. Moreover, the weight value of the service can change during the use of the electronic device 1 for example when the information included in the cell changes, which is described later in this specification.

Figure 1 shows the implementation of a method according to a preferred embodiment of the invention in a reduced block chart. In the method according to the invention, on the display 4 one cell is formed of the electronic device for each such application installed in the electronic device 1 that produces information to the user, *i.e.* one or a plurality of services 1a, 1b, 1c whose function the user can control is determined for the application. It is not necessary to form a separate cell for such applications that the user cannot influence in. One such application is the operating system of the electronic device 1. Instead, one or a plurality of cells can be formed for possible notices generated by the operating system. The cells are determined for example by examining in the user interface 2 the number of the services 1a, 1b, 1c installed in the electronic device that need a separate cell, and the image field of the display is divided into a number of parts (cells) corresponding to this number. At this phase, the cells can be substantially of the same size, or in the definition of cell size it is possible to consider a weight value defined for a service, wherein a larger cell is formed to a service with a higher (more important) weight value compared to an application with a lower weight value. The cells can *e.g.* have a form of a polygon with vertexes whose distance from the mid-point of the cell is advantageously longer the higher the weight value of the service related to the cell. Also rounded polygons, splines, or other accurately defined bent forms can be used in the definition of the cell form. Also other geometric forms can be possible in case empty space is left therebetween, if necessary, so that the cells do not cover each other.

In the determination of cells *e.g.* angular points or other such points of polygon are used that indicate a direction of change at the edge of cell. Adjacent cells can have same angular points, and an angular point of a cell can be located at the edge of the adjacent cell. The edge of the adjacent cell and the angular point are not, at least to a significant degree, located in the area of any other cell, *i.e*., the cells have preferably no superimposed areas. Cell definitions 3 are stored into the memory 6, from where they can, if needed, be retrieved to form a cell on the display. The cell definitions can be changed by storing the changed definitions into the memory 6.

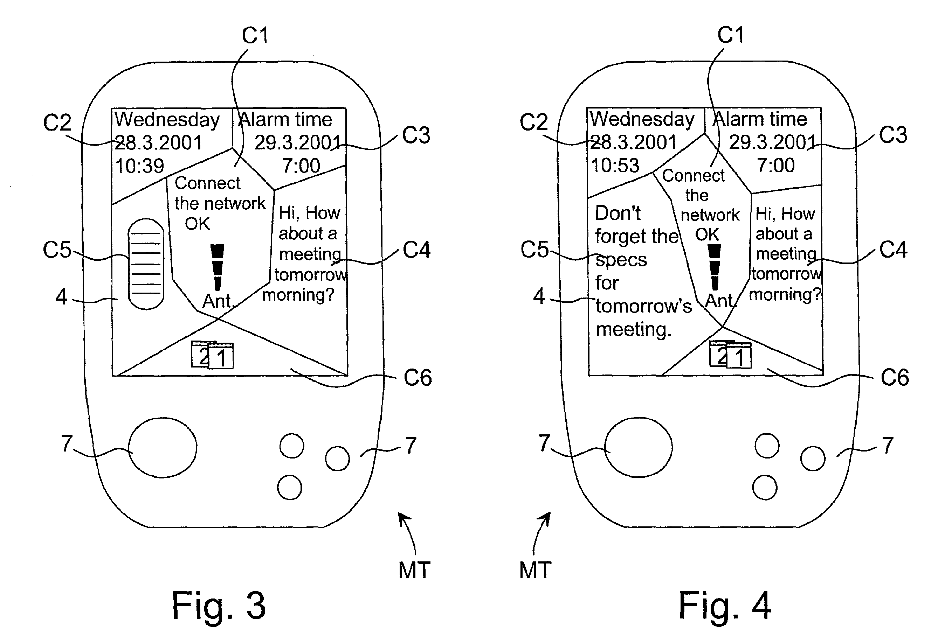

The accompanying Fig. 3 illustrates an example of a display 4 divided into cells C1 to C6. The present example applies six cells but it is obvious that the number of cells can be different from the number used here, and that the number of cells can also vary during the use of the electronic device 1. In Fig. 3 the boundaries of cells C1 to C6 are shown using black lines, but it is obvious that in practice it is not necessary to show the cell boundaries on the display, but different cells can be distinguished *e.g.* by different background colours. In the example of Fig. 3, the first cell C1 has been related to a telephone service, wherein the first cell C1 shows *e.g.* information on an incoming call, such as the number of the calling telephone, the length and/or price of the last call, the length and/or price of all calls, etc. The second cell C2 has been related to a clock service, wherein in this second cell C2 *e.g.* time data is displayed. The alarm clock can be implemented either in connection with the clock service cell C2 or as a separate cell, which is indicated by the third cell C3 in Fig. 3. This third cell C3 shows the set alarm time. The fourth cell C4 is used for showing information on a message service, the fifth cell C5 in the example of Fig. 3 is shown in connection with a notebook service, and the sixth cell C6 is shown in calendar service.

It is assumed that the user initiates the notebook service by selecting the fifth cell C5 by using input means 7, wherein the user can, for example by using the keypad, write notes that are shown on the display 4 in the fifth cell C5 related to the notebook service. The weight value of the service is advantageously increased when the service is activated. Thus, advantageously in the user interface 2 the necessary actions are performed in order to change the appearance of the cells. The user interface 2 examines the cell definitions 3 stored in the memory 6 and defines new cell definitions 3. In this example, the size of this fifth cell C5 related to the notebook service is increased so that more information can be shown on the display 4. This situation is illustrated in Fig. 4. The increasing of cell has been implemented in a manner that the distance of the angular points of the cell has been increased relative to the mid-point to the degree that is possible. The angular points at the edge of the display 4 are not moved outside the display 4. Any angular points are neither moved outside the display 4 due to a change in cell size. The size change of this fifth cell C5 causes that the size of at least one adjacent cell must be decreased so that the cells do not cover each other. In the example situation illustrated in Figs. 3 and 4 the size of the fourth cell C4 and the size of the sixth cell C6 are decreased. At the same time, the amount of information that can be displayed is reduced, or the information is displayed in a smaller size, if possible. Thus, the message displayed on the display 4 by the message service is shortened, or the size of the characters used in the message is decreased, in case the same amount of message is still wished to be shown on the display 4. This can be necessary in a situation, in which the user has simultaneously the message service active. After changing the size of the fifth cell C5, a larger space on the display 4 is reserved for the notebook service. After the user has stopped using the notebook service, the size of the fifth cell C5 can be decreased, and the size of other cells can be increased, if needed.

The principles described above can also be applied in situations in which the size of other service cells needs to be changed. For example the calendar service can detect that the user has a meeting marked in the calendar, wherein the calendar service is activated at the marked moment and the appearance of the soul C6 reserved for the calendar service is changed. Moreover, said calendar event is shown in the cell C6.

The change of appearance of cell can also be continuous, wherein the cell size is increased and decreased at intervals. In this case cell detection can be improved compared to a situation, in which a change takes place only once when the information changes. Such a continuously changing (blinking) cell is applicable particularly for such services in which the quantity of information shown is relatively small, such as telephone service and alarm service. Instead of or in addition to changing the cell size it is possible to change also some other visual characteristics of the cell, such as the background colour and/or the colour in which the information is shown. When changing the cell, it is possible also to perform other types of user interface measures, such as to form an alarm sound or to adjust the volume of the sound repeated through earpiece/loudspeaker.

Upon considering the change demands of the cell in the method of yet another preferred embodiment of the invention, also the time data of the information and/or the use of service are taken into consideration. Thus, for example the measurement of time is started from the moment of change of information shown in some cell and after a certain time has passed, the cell size of said cell is reduced. In a corresponding manner, when new information is introduced, the cell size is enlarged. In this manner, it is possible to consider also how recent the information is when dividing the image area of the display 4 to be used by different cells C1 to C6.

Functions of the method according to the invention can to a great extent be implemented in the application software of the control means 5 of the electronic device. The application software advantageously comprises an operating system that examines the status of different services. Therefore, such a service in which the information changes preferably increases the weight value of the service and/or sets status information on the change. Next time when the operating system examines the status information or after having detected a change in the weight value of the service in some other manner, the operating system adjusts the appearance of the cell related to said service in a corresponding manner. Also, if needed, the operating system attends to supervising the time data and changing of cell appearance in accordance with this time data.

In the memory 6 of the electronic device there is for example stored a set of angular points that are used in the changing of cell size. This is a preferable solution particularly in such electronic devices in which the control means 5 has a limited capacity, wherein less calculation is required when changing the cells. When implementing changes in a blinking cell, it is possible also to store a set of angular points in accordance with which the cells are changed. In case the control means 5 has sufficient capacity it is possible at each change to implement changes in cell size by calculation.

In case a new service is added to the electronic device 1, at least the size of one cell is changed if there is no free space on the display 4. In case one of the existing services is removed from the electronic device 1, the cell size of at least one remaining service is changed or the area of the service to be removed is left empty.

If it is not possible to arrange a separate cell for all the services installed in the electronic device 1 because the image area of the display is limited, it is possible for example to operate as follows. A hierarchy is defined for the cells, wherein one cell is reserved for changing from one hierarchy level to another. In this case, cells of at least partly different services are displayed in different hierarchies. In this case, a change in the information of such a service that is not shown in the display 4 in the active hierarchy, a new cell is preferably added for this service and the cell size of at least one other cell is reduced.

It is obvious that the present invention is not limited solely to the above-presented embodiments, but it can be modified within the scope of the appended claims.

## Claims

1. A method for displaying information on services (1a, 1b, 1c) on the display (4) of an electronic device (MT), **characterized in that** the display (4) is divided into cells (C1 to C6), and that in one cell (C1 to C6) information of one service is displayed.

2. The method as set forth in claim 1, **characterized in that** when the information contents of the cell is changed, the appearance of the cell (C1 to C6) is changed.

3. The method as set forth in claim 2, **characterized in that** the size of one cell is changed, wherein the cell size of at least one other cell is changed in a corresponding manner.

4. The method as set forth in claim 2 or 3, **characterized in that** the colour and/or brightness of the cell (C1 to C6) is changed.

5. The method according to any of claims 1 to 4, **characterized in that** a weight value is determined for the services (1a, 1b, 1c), and that the placing of cells on the display is determined at least partly on the basis of the weight values of the services (1a, 1b, 1c) corresponding to the cells.

6. The method as set forth in any of the claims 1 to 5, **characterized in that** at least one cell (C1 to C6) is formed for each such service (1a, 1b, 1c) in which visual information is formed to be shown on a display, and that all the formed cells (C1 to C6) are shown on the display simultaneously.

7. The method as set forth in claims 1 to 6, **characterized in that** when a new cell is added on the display, a location and a form is selected for the cell to be added, wherein the form of the cells that are located in the area where said cell is to be positioned is changed in a manner that the cell to be added and the other cells do not use the same areas on the display.

8. The method as set forth in any of claims 1 to 7, **characterized in that** the areas defined for the cells C1 to C6 are accurately defined curved forms.

9. The method as set forth in claim 8, **characterized in that** at least a part of the areas defined for the cells (C1 to C6) are polygons.

10. The method as set forth in claim 8 or 9, **characterized in that** at least a part of the areas defined for the cells (C1 to C6) are circular.

11. An electronic device (MT) comprising means (5) for performing services (1a, 1b, 1c), a display (4), and means (2, 5) for showing information on services on the display (4) of the electronic device, **characterized in that** the electronic device (MT) comprises means (2, 6) for dividing the display (4) into cells (C1 to C6), and means (2) for showing information on one service (1a, 1b, 1c) in one cell (C1 to C6).

12. The electronic device (MT) as set forth in claim 11, **characterized in that** it comprises means (2, 6) for changing the appearance of the cell (C1 to C6) when the information contents of the cell changes.

13. The electronic device (MT) as set forth in claim 12, **characterized in that** means (2,6) for changing the appearance of the cell (C1 to C6) comprise means (2, 6) for changing the size of one cell, wherein the size of at least one other cell is arranged to be changed in a corresponding manner.

14. The electronic device (MT) as set forth in claim 12 or 13, **characterized in that** the means (2, 6) for changing the appearance of the cell (C1 to C6) comprise means (2, 6) for changing the colour and/or the brightness of the cell.

15. The electronic device (MT) as set forth in any of the claims 11 to 14, **characterized in that** it comprises means (2, 6) for determining a weight value for the services (1a, 1b, 1c), and means (2) for determining the placing of cell on the display (4) at least partly on the basis of the weight values of the services corresponding to the cells.

16. The electronic device (MT) as set forth in any of the claims 11 to 15, **characterized in that** it comprises means (2, 6) for forming at least one cell (C1 to C6) for each such service (1a, 1b, 1c) in which visual information is formed to be displayed on the display (4), and that all the formed cells (C1 to C6) are arranged to be shown on the display (4) simultaneously.
